# EUROPEAN PATENT APPLICATION

(11) **EP 4 672 544 A1**
(43) Date of publication of application: **31.12.2025**
(21) Application number: 24185255.7
(22) Date of filing: 28.06.2024
(51) Int. Cl.: H02J 7/00

(54) **BATTERY MODULE**

(71) Applicant: Nicoventures Trading Limited, London WC2R 3LA (GB)
(72) Inventor: POYNTON, Simon, 1 Water Street, London, WC2R 3LA (GB); BRUTON, Connor, 1 Water Street, London, WC2R 3LA (GB)
(74) Representative: Whiting, Gary

(57) **Abstract**

An aerosol provision device and battery module and are described. The battery module is connectable to an aerosol provision device for generating aerosol and comprises a battery for providing electrical power to the aerosol provision device and a machine-readable medium storing a battery identifier.

## Description

### Technical Field

The present specification relates to devices of aerosol provision systems.

### Background

Aerosol provision devices are known that produce an aerosol during use, which is inhaled by a user. Aerosol provision devices are known that comprise batteries for providing electrical power (which may for example be used in producing the aerosol). There remains a need for further developments in this field.

### Summary

In a first aspect, this specification describes a battery module connectable to an aerosol provision device for generating aerosol, the battery module comprising: a battery for providing electrical power to the aerosol provision device; and a machine-readable medium storing a battery identifier.

The battery identifier may uniquely identify the battery.

The battery identifier may be indicative of characteristics of the battery.

The machine-readable medium may comprise a quick-response, QR, code storing the battery identifier. The machine-readable medium may comprise a digital storage accessible via a digital bus and storing the battery identifier, and the battery identifier may be readable from the digital storage via the digital bus. The battery module may comprise a near-field communication, NFC, tag, the machine-readable medium may comprise a memory of the NFC tag, the memory storing the battery identifier, and the battery identifier may be obtainable from the memory via an NFC reader device. The battery module may comprise a radio-frequency identification, RFID, device, and the machine-readable medium may comprise a memory of the RFID device, the memory storing the battery identifier, and the battery identifier may be obtainable from the memory via an RFID reader device. The machine-readable medium may comprise an optically readable medium storing the battery identifier, and the battery identifier may be readable from the machine-readable medium using an optical sensor. The machine-readable medium may comprise a resistor, an electrical property of the resistor being indicative of the battery identifier, and the battery identifier may be readable from the machine-readable medium using one or more voltage and/or current sensors.

In a second aspect, this specification describes an aerosol provision device for generating aerosol, the aerosol provision device being connectable to a battery module, the battery module comprising a battery and a machine-readable medium storing a battery identifier, wherein the aerosol provision device is configured to, when connected to the battery module, receive electrical power from the battery of the battery module, and wherein the aerosol provision device comprises a controller configured to obtain the battery identifier from the machine-readable medium of the battery module.

The aerosol provision device may comprise an optical sensor, the machine-readable medium of the battery module to which the aerosol provision device is connectable may comprise a quick-response, QR, code storing the battery identifier, and the controller may be configured to read the battery identifier from the QR code using the optical sensor.

The machine-readable medium of the battery module to which the aerosol provision device is connectable may comprise a digital storage storing the battery identifier, and the controller may be configured to read the battery identifier from the digital storage of the machine-readable medium via a digital bus when the aerosol provision device is connected to the battery module.

The aerosol provision device may comprise a near-field communication, NFC, or radio-frequency identification, RFID, reader, the battery module to which the aerosol provision device is connectable may comprise an NFC tag or RFID device, the machine-readable medium of the battery module to which the aerosol provision device is connectable may comprise a memory of the NFC tag or RFID device storing the battery identifier, and the controller may be configured to obtain the battery identifier from the memory of the NFC tag or RFID device using the NFC or RFID reader.

The aerosol provision device may comprise an optical sensor, the machine-readable medium of the battery module to which the aerosol provision device is connectable may comprise an optically readable medium storing the battery identifier, and the controller may be configured to obtain the battery identifier from the machine-readable medium using the optical sensor.

The aerosol provision device may comprise a voltage and/or current sensor, the machine-readable medium of the battery module to which the aerosol provision device is connectable may comprise a resistor, an electrical property of the resistor being indicative of the battery identifier, and the controller may be configured to obtain the battery identifier from the machine-readable medium using the voltage and/or current sensor.

The aerosol provision device may be a non-combustible aerosol provision device.

The aerosol provision device may be configured to receive a removable article comprising an aerosol generating material.

In a third aspect, this specification describes a method comprising: obtaining, by a controller of an aerosol provision device, a battery identifier from a machine-readable medium of a battery module, the battery module being connectable to the aerosol provision device to provide electrical power from a battery of the battery module to the aerosol provision device.

In a fourth aspect, this specification describes computer-readable instructions which, when executed by a computing apparatus, cause the computing apparatus to perform (at least) any method as described herein (including the method of the third aspect described above).

In a fifth aspect, this specification describes a computer-readable medium (such as a non-transitory computer-readable medium) comprising computer program instructions stored thereon for performing (at least) any method as described herein (including the method of the third aspect described above).

In a sixth aspect, this specification describes an apparatus comprising: at least one processor; and at least one memory including computer program code which, when executed by the at last one processor, causes the apparatus to perform (at least) any method as described herein (including the method of the third aspect described above).

In a seventh aspect, this specification describes a computer program comprising instructions which, when executed by an apparatus, cause the apparatus to: obtain a battery identifier from a machine-readable medium of a battery module, the battery module being connectable to the aerosol provision device to provide electrical power from a battery of the battery module to the aerosol provision device.

In an eighth aspect, this specification describes a kit of parts comprising: a battery module set out above with respect to the first aspect; an aerosol provision device as set out with respect to the second aspect; and an article comprising an aerosol generating material for use in the aerosol provision device. In some examples, the article is a removable article comprising an aerosol generating material.

In a ninth aspect, this specification describes an aerosol provision system comprising an aerosol provision device as set out above with respect to the second aspect; and a battery module as set out above with respect to the first aspect.

The aerosol provision system may comprise a replaceable article comprising an aerosol generating material.

### Brief Description of the Drawings

Example embodiments will now be described, by way of example only, with reference to the following schematic drawings, in which:
FIG. 1 is a schematic diagram of an aerosol provision system in accordance with an example embodiment;
FIG. 2 is a schematic diagram of an aerosol provision system in accordance with an example embodiment;
FIG. 3 is a schematic diagram of an aerosol provision system in accordance with an example embodiment;
FIG. 4 is a schematic diagram of an aerosol provision system in accordance with an example embodiment;
FIG. 5 is a flow diagram of a method in accordance with an example embodiment;
FIG. 6 is a flow diagram of a method in accordance with an example embodiment;
FIG. 7 is a block diagram of a non-combustible aerosol provision system in accordance with an example embodiment;
FIG. 8 is a block diagram of a processing system that may be used to implement an example embodiment; and
FIG. 9 is a block diagram of a system in accordance with an example embodiment.

### Detailed Description

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise one or more active substances and/or flavours, one or more aerosol-former materials, and optionally one or more other functional material.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

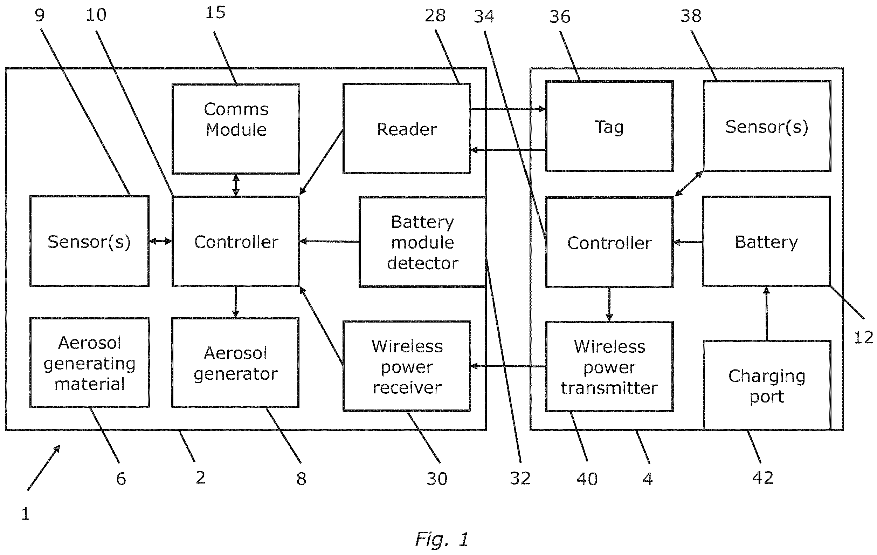

FIG. 1 is a schematic diagram of an aerosol provision system in accordance with an example embodiment, indicated generally by reference numeral 1.

System 1 comprises aerosol provision device 2 and battery module 4. Aerosol provision device 2 comprises aerosol generating material 6, aerosol generator 8, controller 10, reader 28, sensor(s) 9, battery module detector 32, and wireless power receiver 30. Battery module 4 comprises battery 12 (e.g., a rechargeable battery) or some other electrochemical storage system (e.g., one or more batteries, such as Li-ion batteries) and/or one or more supercapacitors. Battery module 4 further comprises tag 36, sensor(s) 38, controller 34, wireless power transmitter 40, and charging port 42.

Battery module 4 is reversibly (e.g., detachably and/or reattachably) connectable to aerosol provision device 2. For example, one or both of aerosol provision device 2 and battery module 4 may comprise a connector assembly configured to retain battery module 4 in a position (or limited range of positions) with respect to aerosol provision device 2. The battery module 14 may, for example, be connected to the side or base of the aerosol provision device 12 or could, for example, be inserted into the device. The skilled person will be aware of many suitable configurations.

Aerosol provision device 2 may comprise a battery module detector 32, such as an optical or capacitive sensor, configured to detect the connection of battery module 4 to device 2. For example, when battery module 4 is retained in position by a connector assembly, it may contact a capacitive sensor and be detected.

Battery module 4 is configured to provide power to aerosol provision device 2 when connected to aerosol provision device 2. In the illustrated example of system 1, battery module 4 is configured to provide power to aerosol provision device 2 wirelessly. In this example, battery module 4 comprises a wireless power transmitter 40 (e.g., comprising a coil) configured to wirelessly transmit power for reception by wireless power receiver 30 (e.g., comprising another coil). For example, battery module 4 may comprise a coil that, when battery module 4 is connected to aerosol provision device 2 (for example, using a connector assembly), is positioned to be inductively coupled with a corresponding coil in aerosol provision device 2 to permit wireless power transfer.

Battery 12 of battery module 4 may be rechargeable. In example system 1, battery module 4 comprises charging port 42, through which battery 12 may be charged (for example, by connecting the charging port to a source of electrical power). Charging port 42 may be accessible when battery module 4 is connected to aerosol provision device2 (e.g., to facilitate charging while battery module 4 is connected to aerosol provision device 2). In other examples, charging port 42 may be inaccessible (e.g., obscured) when battery module 4 is connected to aerosol provision device 2, preventing charging using the port. In other examples, battery module 4 comprises a wireless power receiver (e.g., comprising a coil) for receiving power wirelessly, to facilitate wireless charging of battery 12. Battery module 4 may additionally or alternatively have a two-way power connection with aerosol provision device 2 when the devices are connected, so that battery 12 may be charged via a charging port or wireless charging circuit of aerosol provision device 2. The battery module 14 may have power connections (e.g., ports) that can be used to provide electrical power to the aerosol provision device 12, without charging the battery 15 (for example by locating the aerosol provision system 10 within a docking station).

Controller 10 may be configured to receive user inputs. User inputs may be received from sensors 9, which may include one or more sensors configured to detect user interaction with the device, or from other user interface elements on aerosol provision device 2. Controller 10 may further be configured to receive user inputs from one or more separate devices having user interface elements, for example via comms module 15. Comms module 15 may comprise a wireless transceiver via which comms module 15 may be configured to wirelessly communicate with external devices using a wireless networking protocol. In some examples comms module 15 may communicate with external device using the Bluetooth standard. Controller 10 may be configured to respond to inputs received via the comms module. For example, the comms module may receive a remote deactivation command, and the controller may accordingly deactivate aerosol provision device 2. Controller 10 may additionally or alternatively be configured to receive power from battery 12 of battery module 4. Controller 10 may be configured to provide a driving current or voltage to aerosol generator 8 using power from battery 4 based at least partly on user inputs. In some examples, controller 10 may be configured to receive one or more inputs from one or more sensors 9, such as temperature, current, or voltage sensors, and controller 10 may control the provision of a driving current based at least in part on input from the sensors 9. Other example sensors (that could be provided in any combination, in addition to, or instead of, a pressure sensor) include: a temperature sensor, a battery fuel gauge, an altimeter, a global positioning system (GPS) device, a vibration sensor, a Bluetooth module (e.g. to enable remove activation or deactivation of the device), a relative humidity sensor, or an RFID sensor).

When the aerosol generating material 6 is acted upon by the aerosol generator 8, an aerosol may be generated. For example, in some embodiments the aerosol generator 8 may be a heater, and the aerosol generating material 6 may be heated by the aerosol generator to form an aerosol. In some examples, the aerosol generator 8 may be a susceptor, a resistive heater, an ultrasonic transducer, some other heater, or a mechanism to generate an aerosol without heating (such as a pump, a vibration mechanism, etc.). The aerosol generating material 6 may be a film or gel. In examples in which aerosol generator 8 is a susceptor, controller 10 may comprise components (such as coils) which may be inductively coupled with the susceptor and driven with a suitable alternating current to heat the susceptor.

In some embodiments, aerosol generating material 6 is retained in a consumable that is removable from aerosol provision device 2. In some embodiments this consumable may further include the aerosol generator 8, or portions of the aerosol generator 8. Therefore, in some embodiments, aerosol provision device 2 comprises controller 10 and is connectable to a consumable comprising aerosol generating material and an aerosol generator 8 to provide aerosol. In other embodiments aerosol provision device 2 comprises controller 10 and aerosol generator 8 and is connectable to a consumable comprising aerosol generating material 6.

Battery module 4 comprises a machine-readable medium storing a battery identifier. In this embodiment, the machine-readable medium comprises a memory of tag 36 of battery module 4. Tag 36 may be a Radio-Frequency Identification (RFID) tag, a Near-Field Communication (NFC) tag, or another device having a memory that may be read wirelessly. Tag 36 may comprise an antenna, a controller, and a memory. Aerosol provision device 2 comprises a corresponding reader 28 (e.g., an RFID reader or an NFC reader device), configured to read tag 36 to read the battery identifier from the memory of the tag. Reader 28 may be configured to transmit a prompt signal to a receiver of tag 36. Tag 36 may be configured to retrieve data from the memory and transmit this data to reader 28 in response to receiving the prompt signal. Tag 36 may be powered by the prompt signal or by battery 12.

In some embodiments, the machine-readable medium may comprise a resistor, or a resistive component such as a fuse. Electrical properties of the resistor or resistive component, such as a resistance, or a voltage-resistance profile, or a current-resistance profile, may be measured by aerosol provision device 2, for example using sensors 9 of aerosol provision device, electrically coupled to terminals of the resistor or resistive device via contacts of a connector assembly. Electrical properties of the resistor or resistive component may be measured by the sensor. The measured electrical properties may in some embodiments be mapped to properties of the battery using a mapping or lookup table. For example, in some embodiments a particular resistance, or range of resistances may be mapped to a set of one or more battery properties, which may for example comprise a minimum charge level at which the battery may be discharged.

In some embodiments the resistor or resistive component may also serve as a fuse, and may be configured to prevent discharging of the battery if the drawn current is too great, (for example, because the battery has been incorrectly identified from the battery identifier, which may at least in part be derived from properties of the fuse).

In some embodiments, such as in system 1, battery module 4 comprises controller 34. In some embodiments controller 34 may control charging and/or discharging of the battery. Additionally, or alternatively, controller 34 may regulate the voltage, current, or power output of the battery. In some embodiments controller 34 receives input from one or more sensors 38. Sensors 38 may comprise one or more of temperature, current, voltage, altitude, vibration, and/or relative humidity sensors. Sensors 38 may additionally or alternatively comprise a satellite navigation receiver (such as a GPS receiver) for positioning. Sensors 38 may comprise a fuel gauge. One or more current and or voltage sensors may monitor the voltage and/or charging and discharging current through the battery, the output of which may be used by controller 34 to determine a state of charge of the battery. Controller 34 may in some embodiments comprise a Bluetooth module (e.g., to enable remove activation or deactivation of the device).

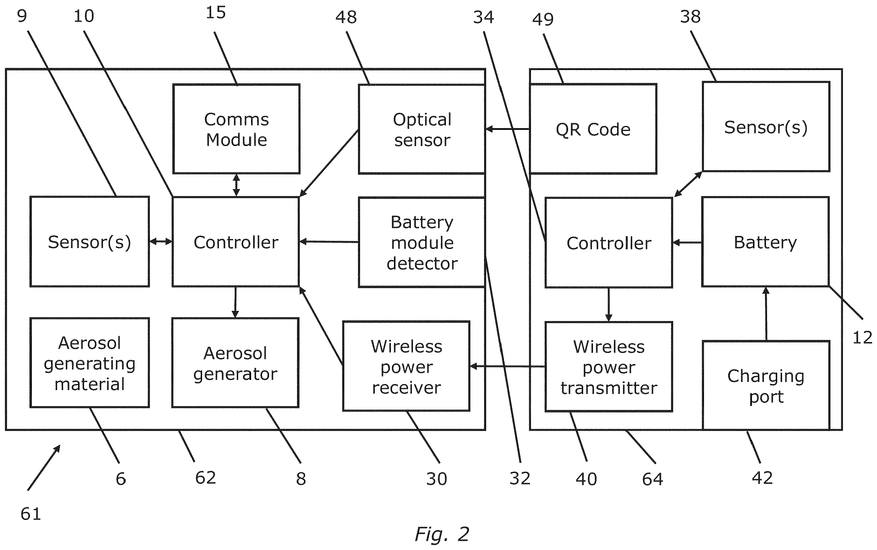

FIG. 2 is a schematic diagram of an aerosol provision system in accordance with an example embodiment, indicated generally by the reference numeral 61. Aerosol provision system 61 comprises aerosol provision device 62 and battery module 64. Aerosol provision device 62 and battery module 64 are similar to their counterparts in aerosol provision system 1 and differ in how the battery identifier is stored in a machine-readable medium of battery module 64, and how the battery identifier is obtained from the machine-readable medium by aerosol provision device 62.

Instead of or in addition to tag 36, in aerosol provision system 61 battery module 64 comprises quick-response code (QR code) 49. QR code 49 stores (e.g., encodes in a visual machine-readable format) the battery identifier. Instead of or in addition to reader 28, in aerosol provision system 61 aerosol provision device 62 comprises an optical sensor 48 configured to scan QR code 49 and derive the battery identifier from the scan.

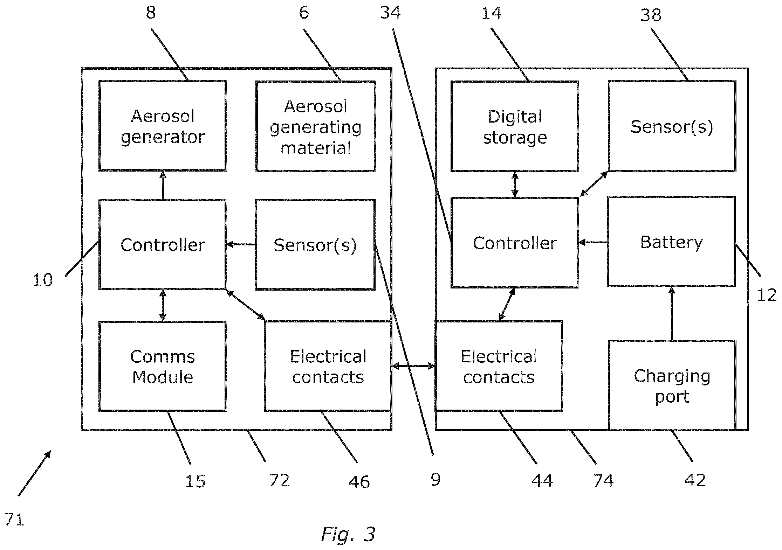

FIG. 3 is a schematic diagram of an aerosol provision system in accordance with an example embodiment, indicated generally by the reference numeral 71. Aerosol provision system 71 comprises aerosol provision device 72 and battery module 74. Aerosol provision device 72 and battery module 74 are similar to their counterparts in aerosol provision system 1 and differ in how data and power are transferred between battery module 74 and aerosol provision device 72.

Aerosol provision device 72 of aerosol provision system 71 comprises electrical contacts 46, and battery module 74 of aerosol provision system 71 comprises electrical contacts 44. These electrical contacts may facilitate one- or two-way electrical power transfer between aerosol provision device 72 and battery module 74 (e.g., by creating a conductive path between a battery terminal and a terminal of aerosol provision device 72). In this embodiment, electrical contacts 44 and 46 also facilitate data transfer between device 72 and battery module 74 (e.g., by forming part of a data bus between a controller and/or digital storage of battery module 74 and a controller and/or data storage of device 72). The electrical contacts that facilitate data transfer between battery module 74 and device 72 may be the same contacts that facilitate electrical power transfer (e.g., a data signal and power may use the same connection) or the electrical contacts may be separate (e.g., data and power may use dedicated connections). Electrical contacts 44 and 46 may be used in addition to or alternatively to wireless power transmitter 40 and receiver 30. Figure 3 does not illustrate how many electrical contacts or terminals facilitate data and/or power transfer. In some examples, two connections (e.g., positive and neutral voltage, or positive and negative voltage) are provided for power transfer. In some examples, up to four data connections may be provided between battery module 74 and device 72.

By way of example, one example implementation includes up to six connectors as follows:
- Connector 1: positive voltage connection
- Connector 2: negative voltage connection
- Connector 3: negative temperature coefficient connection
- Connector 4: Sensor input or control input (e.g., fuel gauge)
- Connector 5: Data connection
- Connection 6: Second sensor connection.

In other examples, up to ten, or ten or more connectors may be used.

In some embodiments the electrical contacts facilitate a two-way power connection between battery module 74 and aerosol provision device 72 when the devices are connected, and battery 12 may be additionally or alternatively charged by a charging port located on aerosol provision device 72.

Battery module 74 of aerosol provision system 71 comprises digital storage 14. Digital storage 14 stores a battery identifier. The battery identifier is retrievable from battery module 4 via a digital bus. In this example digital storage 14 has a data connection (e.g., via a digital bus) with controller 34 of battery module, which may communicate the battery identifier to the aerosol provision device (e.g., to controller 10) via a digital bus comprising electrical contacts of electrical contacts 46 and 44.

In other examples, controller 34 is not required to retrieve the battery identifier from digital storage 14, and controller 10 may retrieve the battery identifier directly from digital storage 14.

Digital storage 14 may comprise a non-volatile memory. The memory may comprise non-erasable or erasable memory. Digital storage 14 may comprise flash memory, magnetic storage, and/or optical storage.

The use of wireless power transfer between the battery module and the aerosol provision device is discussed above in connection with systems 1 and 61, while the use of electrical contacts to form a conductive connection for transferring power has been discussed in connection with system 71. In other embodiments the wireless power transfer of systems 1 and 61 may be replaced or supplemented with conductive power transfer using electrical contacts. Similarly, in other embodiments the conductive power transfer of system 71 may be supplemented or replaced with the wireless power transfer of systems 1 and 61.

The use of machine-readable storage media comprising tags (e.g., RFID or NFC tags) for storing a battery identifier and the use of corresponding device side readers is discussed above in connection with system 1. The use of machine-readable storage media comprising QR codes for storing a battery identifier and the use of corresponding device side sensors is discussed above in connection with system 61. The use of digital storage media accessible via a digital bus is discussed above in connection with system 71. In other embodiments the tags and readers of system 1 may be replaced or supplemented with the QR codes and sensors and/or the digital storage media and bus of systems 61 and 71. Additionally or alternatively, the QR codes and sensors of system 61 may be replaced or supplemented with the tags and readers and/or the digital storage media and bus of systems 1 and 71. Additionally or alternatively, the digital storage media and bus of system 71 may be replaced or supplemented with the tags and readers and/or the QR codes and sensors of systems 1 and 61.

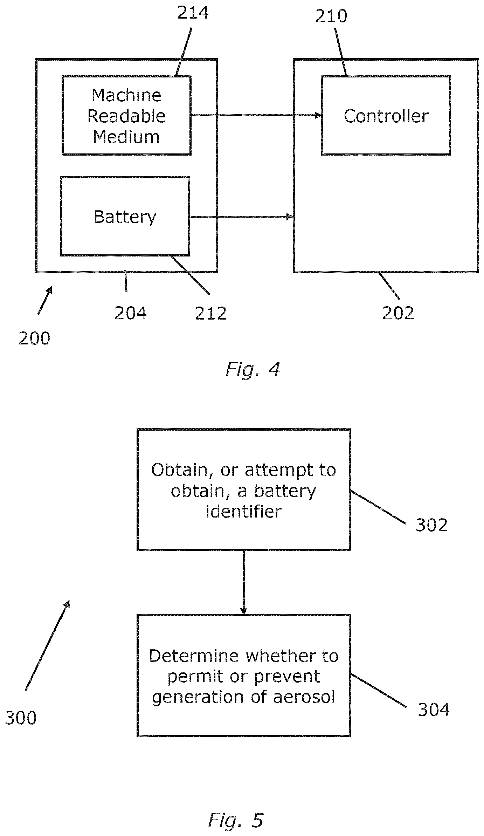

FIG. 4 is a schematic diagram of an aerosol provision system in accordance with example embodiments, indicated generally by reference numeral 200. Aerosol provision system 200 comprises aerosol provision device 202 and battery module 204. In some embodiments aerosol provision device 202 may comprise features of aerosol provision device 2, 62, or 72. In some embodiments battery module 204 may comprise features of battery module 4, 64, or 74.

Battery module 204 comprises battery 212 and machine-readable medium 214. Aerosol provision device 202 comprises controller 210.

Battery module 204 is connectable to aerosol provision device 202 and, when connected to aerosol provision device 202, is configured to provide power from battery 212 to aerosol provision device 202. FIG. 4 does not show how power is transferred from battery 212 to aerosol provision device 202, but in some embodiments the arrangements described in connection with systems 1, 61, or 71 may be used (e.g., conductive or wireless power transfer may be used).

Machine-readable medium 214 stores a battery identifier. The battery identifier may uniquely identify the battery. For example, the battery identifier may comprise or correspond to digital information, such as a string of characters, unique to the battery module. Properties of the battery, such as maximum rated current, rated voltage, maximum possible charge, etc., may be derivable at least partly from the battery identifier. For example, the whole or parts of the battery identifier may map to battery properties using a mapping or lookup table, which may be stored in a memory of controller 210 of aerosol provision device 202. In other embodiments, the battery identifier may map to battery properties using a lookup table stored remote from aerosol provision device 204. For example, controller 210 may be in communication with an external device via a comms module and may access a lookup table stored on or accessible to the external device. The external device may be a computing device running an application configured to access the lookup table. The external device may access the lookup table over a network, for example, the external device and a server storing the lookup table may be connected to the same network, such as the internet, and the external device may be configured to access the whole of or relevant parts of the lookup table. The battery identifier may additionally or alternatively identify any one or more of a batch of battery modules to which battery module 204 belongs, a place of manufacture of battery module 204, a date and/or time of manufacture of battery module 204. In some embodiments, properties of the battery module derivable at least partly from the battery identifier (in some embodiments using a lookup table or mapping) may include one or more of discharge characteristics of the battery, such as any one or more of a discharging voltage, a rated discharging current, a rated discharging power, a maximum and/or minimum charge level at which the battery may be safely discharged, and a maximum and/or minimum temperature at which the battery may be safely discharged.

Additionally or alternatively properties of the battery module derivable at least partly from the battery identifier (in some embodiments using a lookup table or mapping) may include one or more of charging characteristics of the battery, such as any one or more of a charging voltage, a charging current, a charging power, a maximum and/or minimum charge level at which the battery may be safely charged, and a maximum and/or minimum temperature at which the battery may be safely charged.

One or more discharge characteristics of the battery of the battery module may need to meet requirements of a particular aerosol provision device for that aerosol provision device to safely generate aerosol using that battery module as a power source.

Aerosol provision device 202 may be compatible with a plurality of different battery modules 204, for example because the discharge characteristics of each meets the requirements of aerosol provision device 202. The charging characteristics of compatible battery modules may however be different, for example because the battery chemistry/size, etc. of the battery is different. This may result in different compatible battery modules having different safe maximum charging rates.

Aerosol provision device 202 is connectable to battery module 204 and is configured to receive power from battery 212 when connected to battery module 204 as discussed above. Controller 210 is configured to obtain the battery identifier from machine-readable medium 214. In some embodiments, controller 210 may use the obtained battery identifier to distinguish between battery modules used with the device (for example, if the battery identifier uniquely identifies the battery). In some embodiments, controller 210 may use the obtained battery identifier to determine the compatibility of battery 212 with aerosol provision device 202 (for example, if the battery identifier maps to battery properties, the battery properties may be compared to a set of requirements for aerosol provision device 202, or the battery identifier may be compared to a list of battery identifiers compatible with aerosol provision device 202 to determine compatibility). In some embodiments, controller 210 may use the obtained battery identifier to determine whether the battery module is the subject of a recall (for example, the battery identifier may indicate that battery module 204 is part of a batch of batteries that is the subject of a recall). Controller 210 may comprise a microcontroller.

The machine-readable medium 214 may in some embodiments be optically readable by a sensor on the aerosol provision device 202. For example, the machine readable medium 214 may take the form of a barcode or quick-response (QR) code applied to the battery module 204 such that the code is readable by a corresponding optical sensor of the aerosol provision device 202. In other embodiments, the machine-readable medium 214 may be a digital storage accessible via a connector, and the battery identifier may be readable from the digital storage via the connector. For example, in some embodiments the connector may be a connector connectable to a corresponding connector on aerosol provision device 202, and controller 210 may retrieve the battery identifier from the machine-readable medium via this connection. For example, controller 210 may retrieve the battery identifier from a machine-readable medium comprising a digital storage (e.g., memory) via a digital bus. The digital bus may transfer data between aerosol provision device 202 and battery module 204 via respective connectors of aerosol provision device 202 and battery module 204.

In some embodiments the machine-readable medium 214 may be the memory of an NFC tag of battery module 204, and the battery identifier may be retrievable from the memory of the NFC tag using an NFC reader. Aerosol provision device 202 may include an NFC reader that controller 210 may use to retrieve the battery identifier.

In some example embodiments, the machine-readable medium 214 may be the memory of an RFID device of the battery module 204, and the battery identifier may be retrievable from the memory of the RFID device using a reader. Aerosol provision device 202 may include an RFID reader that controller 210 may use to retrieve the battery identifier.

FIG. 5 is a flow diagram of a method in accordance with an example embodiment, indicated generally by reference numeral 300. Steps of method 300 may be carried out by a controller, such as controller 10 or 210.

At step 302, a battery identifier is obtained, or an attempt to obtain a battery identifier is made (e.g., by a controller).

In some examples, attempting to obtain a battery identifier comprises executing some or all of the steps of a method of obtaining a battery identifier, either by executing that method until a battery identifier is obtained or by executing the method until it is determined that a battery identifier has not been or cannot be obtained. For instance, in examples in which the battery identifier is stored in a QR code, a step of attempting to detect a QR code (e.g., by capturing an image or obtaining a captured image) may be carried out, and the method may determine that no QR code is present (and hence, that a battery identifier cannot be obtained from a QR code in the captured image), or proceed to a step of attempting to derive a battery identifier from the QR code. It may be determined at a later step that a battery identifier cannot be obtained from a QR code in the captured image, and the method may determine at that stage that a battery identifier cannot be obtained. For example, data retrieved from the QR code may be processed to determine that the QR code does or does not store a battery identifier. For example, it may be determined from metadata, formatting, or the content of the data stored on the QR code that data stored on the QR code does not comprise a battery identifier.

The battery identifier may be stored on a machine-readable medium, such as one or more of the machine-readable media described in connection with system 200.

At step 304, it is determined (e.g., by the controller) whether to permit or prevent the generation of aerosol by an aerosol provision device based at least in part on the outcome of obtaining or attempting to obtain the battery identifier.

Permitting the generation of aerosol by an aerosol provision device may in some examples comprise placing or keeping the aerosol provision device in a state in which the device is configured to respond to one or more user inputs by generating aerosol. In contrast, preventing the generation of aerosol by an aerosol provision device may in some examples comprise placing or keeping the device in a state in which the device is not configured to respond to the one or more user inputs by generating aerosol.

By permitting or preventing the generation of aerosol by an aerosol provision device based at least in part on the outcome of the obtaining or attempting to obtain the battery identifier, device control decisions can be informed by information on the battery (e.g., derived from the battery identifier or from the presence or absence of a battery identifier). In some examples, a decision to permit or prevent the generation of aerosol may be based only in part on the outcome of obtaining or attempting to obtain the battery identifier, for example, because a decision to permit generation of aerosol may be overridden (e.g., because of a fault detected in another part of the system), or because a decision to prevent generation of aerosol may be overridden.

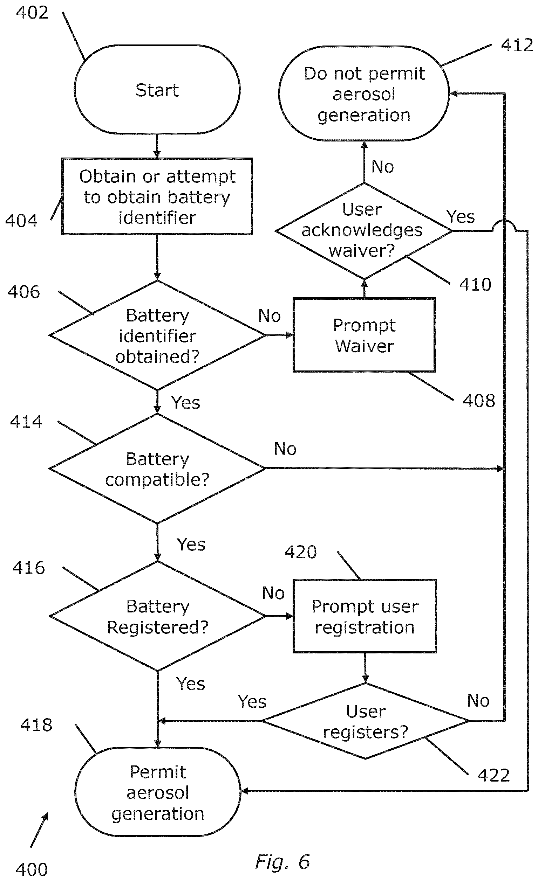

FIG. 6 is a flow diagram of a method in accordance with an example embodiment, indicated generally by reference numeral 400. Steps of method 400 may be carried out by a controller, such as controller 10 or 210.

At step 402, method 400 starts. In some examples this method may be executed when the attachment of a battery module to an aerosol provision device is detected (for example, by the capacitive sensor described in connection with system 100). Additionally or alternatively, this method may be executed whenever the device is powered on, or whenever the device leaves a standby mode, or based on some other condition.

Step 404 comprises obtaining or attempting to obtain a battery identifier. This step may in some embodiments correspond to step 302 of method 300.

In some embodiments, the outcome of obtaining or attempting to obtain a battery identifier may comprise obtaining the battery identifier or not obtaining the battery identifier. If a battery identifier is not obtained, it may be decided at step 406 that the method is to proceed to step 408.

At step 408 a notification is sent to a user of the aerosol provision device. In some example embodiments the notification is sent via a display device integrated into the aerosol provision device, or via a display device networked with, but not necessarily integrated into the aerosol provision device (for example via a wireless networking protocol). In some embodiments the notification may be displayed to a user on a display of a mobile phone, tablet, docking station, or other computing device running an application (app) in communication with the aerosol provision device. The notification may indicate to the user that the battery is not recognised (for example, because no machine-readable storage medium was detected, because no data was recovered, or because data recovered from the machine-readable storage medium did not comprise data recognised as a battery identifier). The notification may prompt the user to acknowledge the notification. For example, the notification may comprise a waiver, and a request to acknowledge the waiver by accepting it.

At step 410, if the user does not provide a suitable acknowledgement, the method proceeds to step 412 and it is decided not to permit aerosol generation. If the user does provide a suitable acknowledgement, for example by accepting a waiver, the method may proceed to step 418, and it may be decided to permit aerosol generation. If a user provides the acknowledgement at step 410, an indication of the acknowledgement having been provided may be stored in a memory (e.g. a memory of controller 10, or controller 210). If the indication of the acknowledgement having been provided is stored in memory, the method may in some embodiments proceed directly from step 406 to 418, or from step 404 to 418, or from step 402 to 418. The indication of the acknowledgement may be associated with the current battery, so in some embodiments may only be valid until the battery is replaced. In other embodiments the indication of the acknowledgement may be associated with a battery identified by data associated with or obtained from the battery, such as data retrieved from the battery, or data related to current and/or voltage supplied by the battery (e.g., current and/or voltage data determined at the aerosol provision device, using current and/or voltage sensors in the aerosol provision device). In further embodiments, the indication of the acknowledgement may not be associated with a particular battery, and may instead indicate that one or more of steps 402 to 418 may be skipped regardless of which unidentified battery is used.

In some embodiments, the method includes a further step (not illustrated on figure 6) of determining whether a battery module has been replaced, or is not associated with the acknowledgement. If it is determined that a battery module has been replaced, or is not associated with the acknowledgement, the acknowledgement may be deleted, ignored, or not relied upon, and the method may proceed through steps 404 to 412 or 418 without skipping steps 404 to 410.

Determining whether a battery module has been replaced may comprise determining based on data from battery module sensor 32 that a battery has been removed. Additionally or alternatively, determining that a battery module has been replaced or is not associated with the acknowledgment may comprise determining that a different result has been obtained at step 404 (e.g. where data not comprising a battery identifier is retrieved at step 404, this data or data derived therefrom may be stored, and it may be determined whether this data has changed the next time step 404 is carried out). Additionally or alternatively, determining that a battery module has been replaced or is not associated with the acknowledgment may comprise determining from sensors (such as sensors 9, which may comprise current and/or voltage sensors configured to obtain information on current and/or voltage supplied by a battery module to the aerosol provision device) that the properties of a battery module in use with an aerosol provision device are different from those of a battery module previously in use with an aerosol provision device, and/or with which the acknowledgement is associated.

The decision to permit or not permit aerosol generation may in some examples persist until the method starts again at step 402.

If at step 404 a battery identifier is obtained, it may be decided at step 406 that the method is to proceed to step 414.

At step 414, it is determined whether the battery module is compatible with the aerosol provision device. The aerosol provision device may require that a battery module supply a particular current and/or voltage, and may additionally or alternatively place other requirements on the battery module. Battery modules may therefore be compatible or incompatible with a given aerosol provision device. The battery identifier may be indicative of the capabilities and/or properties of the battery module (for example, a rated current, voltage, power, etc.)

Determining whether the battery module is compatible with the aerosol provision device may comprise obtaining an indication of the requirements of the aerosol provision device. Between the indication of the requirements and the battery identifier it can be determined whether a battery module having that identifier is compatible with an aerosol provision device having those requirements. For example, the indication of the requirements may simply indicate a type of aerosol provision device (e.g., the indication of requirements may be an indicator unique to the product or combination of hardware), the battery identifier may also uniquely identify the battery module product or hardware combination, and the compatibility may be determined by cross referencing a lookup table. In other examples, the indication of requirements indicates a set of suitable battery identifiers, the battery identifier may indicate a set of suitable aerosol provision devices, and/or the requirements and battery identifier may comprise or be mapped to a set of specifications that are compared to one another to determine compatibility.

If at step 414 it is determined that the battery module is not compatible with the aerosol provision device, the method may proceed to step 412, at which aerosol generation is not permitted.

The method may otherwise proceed to step 416, at which it may be determined whether the battery module is registered with the aerosol provision device. In some embodiments, step 416 may not be included, and if the battery is compatible the method may proceed directly to step 418.

Determining at step 416 whether the battery module is registered with the aerosol provision device may comprise obtaining a list of one or more battery identifiers of battery modules registered with the aerosol provision device, and comparing the battery identifier of the battery module with the list of battery identifiers. The list of battery identifiers may be stored in a non-volatile data storage or memory of the aerosol provision device. Additionally, or alternatively, the list of battery identifiers may be retrieved or accessed as needed from an external device connected to the aerosol provision device (e.g., via a wireless Bluetooth connection).

If the battery module is registered, the method may proceed to step 418, at which aerosol generation may be permitted. If the battery module is not registered, the user may be prompted to register the battery module with the aerosol provision device.

If the battery module is determined not to have been registered, the method may proceed to step 420, at which a user may be prompted to register the battery module. The registration process may be carried out at the aerosol provision device, and/or the registration process may comprise communication with a further device (such as a mobile computing device or docking station), and/or a server. For example, in some embodiments the user may be prompted to enter details (on a user interface of the aerosol provision device or a further device) for registration on a database external to the aerosol provision device. The user may use a user interface of a mobile phone, tablet computer, docking station, or other computing device to perform the registration process. The mobile phone, tablet computer, or other computing device may run an application in communication with the aerosol provision device and/or an external database. Using a device other than the aerosol provision device to carry out battery registration may reduce the required number of user interface elements on the aerosol provision device to allow for registration. Information from the registration process may be sent to an external database, and this may allow registration information from multiple batteries, devices, and/or users to be collated.

At step 422 it may again be determined whether the battery module has been registered, and if the battery module has not been registered the method may proceed to step 412, and if the battery module has been registered the method may proceed to step 418.

In other embodiments, aerosol generation may be permitted regardless of whether the battery module is registered. Therefore, at step 422, once the prompt to register an unregistered battery module has been sent to the user, the method may proceed to step 418 and permit generation of aerosol.

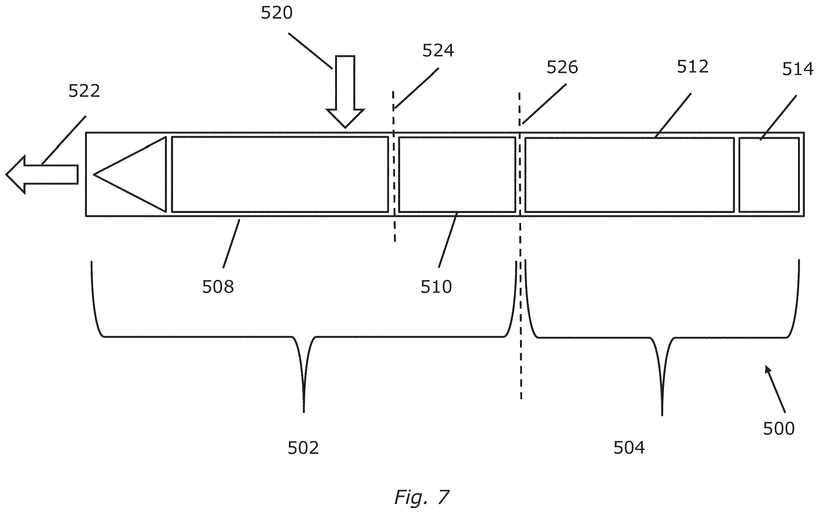

FIG. 7 is a block diagram of a non-combustible aerosol provision system in accordance with an example embodiment, indicated generally by reference numeral 500. Aerosol provision system 500 is an example of an aerosol provision system as described in connection with systems 1, 61, 71 and 200.

Aerosol provision system 500 comprises an aerosol provision device 502 and battery module 504. Aerosol provision device 502 comprises control circuit 510, and an aerosol generator 508. The aerosol generator 508 may comprise a resistive heater for heating an aerosolisable material (e.g., a solid, a liquid, a film or a gel, any of which may comprise tobacco, a tobacco extract, a tobacco derivative etc.) to generate an aerosol (e.g. a vapour). The aerosolisable material is sometimes referred to an as aerosol generating material. It should be noted that the use of resistive heating of an aerosolisable material is described by way of example only. The principles described herein are applicable other aerosol provision systems (such as systems using induction heating) and other aerosolisable materials.

In the use of aerosol provision system 500, air is drawn into an air inlet of the aerosol generator 508, as indicated by arrow 520. An aerosol generated by the aerosol generator 508 exits the device at an air outlet, as indicated by arrow 522 (for example into the mouth of a user of system 500).

In some example embodiments, the aerosol provision device 502 of aerosol provision system 500 comprises two main components, namely a control section comprising controller 510 (which may be referred to as a reusable part) and a consumable part comprising aerosol generator 508 (which may be referred to as a replaceable or disposable cartridge). In the use of the aerosol provision device 502, the control section and the consumable part may be releasably connected at an interface 524. The consumable part may be removable and replaceable (e.g. when the consumable part is used), with the control section being re-used with a different consumable part.

Of course, the aerosol provision system 500 is provided by way of example only and is highly schematic. Many variants are possible. For example, in some example embodiments, air is drawn into an air inlet in the control section, passes through the interface 524, and exits the consumable part. Moreover, in some example embodiments, the aerosol provision device may not be separable into two parts.

Battery module 504 comprises battery 512 (e.g., a rechargeable battery). In the use of the aerosol provision system 500, the aerosol provision device 502 and the battery module may be releasably connected at an interface 526. The battery module may be removable and replaceable (e.g. when the battery is empty, or when the battery is no longer suitable for recharging), with the control section being re-used with a different battery module. Corresponding battery module 504 and aerosol provision device connectors for transferring power between components of battery module 504 and aerosol provision device 502 may be releasably connectable at interface 526. Additionally or alternatively, corresponding battery module 504 and aerosol provision device connectors for transferring data between components of battery module 504 and aerosol provision device 502 may be releasably connectable at interface 526. Battery module 504 further comprises machine-readable storage medium 514. Machine-readable storage medium 514 stores a battery identifier.

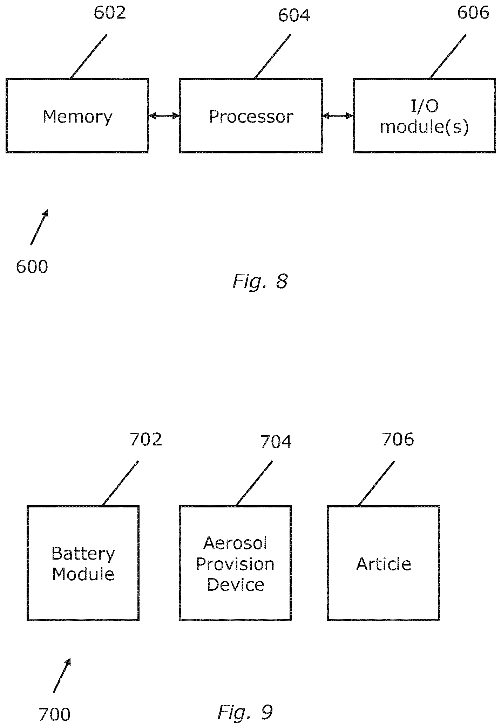

FIG. 8 is a block diagram of a processing system, indicated generally by the reference numeral 600, that may be used to implement one or more of the example embodiments described previously. The processing system 600 may, for example, be (or may include) the apparatus referred to in the claims below.

The processing system 600 may have a processor 604, a memory 602 coupled to the processor (e.g. comprising a random access memory (RAM) and/or a read only memory (ROM)). The processing system 600 may also comprise one or more input/output (I/O) modules 606, such as one or more user interface modules.

The memory 602 may comprise code which, when executed by the processor 604 implements aspects of the methods and algorithms described herein.

A controller is described in connection with methods 300 and 400, and systems 1, 61, 71, 200, and 500. In each of these cases, the controller may comprise processing system 600.

The controller may be configured to receive inputs, which may for example include user input from a user interface and/or sensor data (e.g., voltage, current, or temperature data, which may provide feedback on the performance of an aerosol provision system). The controller may additionally or alternatively receive data from other sources, such as a sensor for obtaining the battery identifier as described above. The processor may execute instructions stored in the memory to process these inputs and generate control signals. In some examples, the controller comprises circuitry for generating a suitable voltage or current for driving the aerosol generator based on control signals from the processor. For example, the controller may accept power from a battery (such as battery 12, 212, or 312) as input, and comprise components for one or more of voltage regulation, current regulation, AC-DC conversion, DC-AC conversion, or modifying a voltage or current frequency, amplitude, or waveform of an electric signal to provide a suitable driving current or voltage to an aerosol generator. The controller may be configured to permit or cause the generation of aerosol (for example, by generating or not generating a particular control signal which may cause or prevent the generation of aerosol). The controller may further be configured to prevent the generation of aerosol (for example, by generating or not generating a control signal which may prevent or cause the generation of aerosol).

Fig. 9 is a block diagram of a system, indicated generally by the reference numeral 700, in accordance with an example embodiment. The system 700 comprises a battery module 702 (such as any of the battery modules described above), an aerosol provision device 704 for generating aerosol, and an article 706. The elements of the system 700 may be provided separately as a kit of parts.

The article 706 may comprise an aerosol generating material for use in the aerosol provision device 704. The article 706 could take the form of a stick (e.g. a heated tobacco stick) or a pod.

The aerosol provision device 704 may include a heater for heating aerosol generating material (e.g. as provided by the article 706). Alternatively, the article 706 may include a heater. In some example embodiments, the article 706 is omitted entirely (e.g. the aerosol provision device may include aerosol generating material; thus, a kit of parts may be provided with just the battery module 702 and the aerosol provision device 706.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. A battery module connectable to an aerosol provision device for generating aerosol, the battery module comprising:
a battery for providing electrical power to the aerosol provision device; and
a machine-readable medium storing a battery identifier.

2. The battery module of claim 1, wherein the battery identifier uniquely identifies the battery.

3. The battery module of claim 1 or claim 2, wherein the battery identifier is indicative of characteristics of the battery.

4. The battery module of any of claims 1-3, wherein the machine-readable medium comprises any one or more of:
a quick-response, QR, code storing the battery identifier;
an optically readable medium storing the battery identifier, wherein the battery identifier is readable from the machine-readable medium using an optical sensor;
a resistor, an electrical property of the resistor being indicative of the battery identifier, wherein the battery identifier is readable from the resistor of the machine readable-medium using one or more voltage and/or current sensors; and
a digital storage accessible via a digital bus and storing the battery identifier, wherein the battery identifier is readable from the digital storage via the digital bus.

5. The battery module of any of claims 1-4, wherein the battery module comprises any one or more of:
a near-field communication, NFC, tag, wherein the machine-readable medium comprises a memory of the NFC tag, the memory storing the battery identifier, and wherein the battery identifier is obtainable from the memory via an NFC reader device; and
a radio-frequency identification, RFID, device, and wherein the machine-readable medium comprises a memory of the RFID device, the memory storing the battery identifier, and wherein the battery identifier is obtainable from the memory via an RFID reader device.

6. An aerosol provision device for generating aerosol, the aerosol provision device being connectable to a battery module, the battery module comprising a battery and a machine-readable medium storing a battery identifier, wherein the aerosol provision device is configured to, when connected to the battery module, receive electrical power from the battery of the battery module, and wherein the aerosol provision device comprises:
a controller configured to obtain the battery identifier from the machine-readable medium of the battery module.

7. The aerosol provision device of claim 6, wherein the machine-readable medium of the battery module to which the aerosol provision device is connectable comprises a digital storage storing the battery identifier, wherein, when the aerosol provision device is connected to the battery module, the controller is configured to read the battery identifier from the digital storage of the machine-readable medium via a digital bus.

8. The aerosol provision device of claim 6 or claim 7, wherein the aerosol provision device comprises any one or more of:
an optical sensor, wherein the machine-readable medium of the battery module to which the aerosol provision device is connectable comprises a quick-response, QR, code storing the battery identifier, and wherein the controller is configured to read the battery identifier from the QR code using the optical sensor;
a voltage and/or current sensor, wherein the machine-readable medium of the battery module to which the aerosol provision device is connectable comprises a resistor, an electrical property of the resistor being indicative of the battery identifier, and wherein the controller is configured to obtain the battery identifier from the machine-readable medium using the voltage and/or current sensor; and
an optical sensor, wherein the machine-readable medium of the battery module to which the aerosol provision device is connectable comprises an optically readable medium storing the battery identifier, and wherein the controller is configured to obtain the battery identifier from the machine-readable medium using the optical sensor.

9. The aerosol provision device of any of claims 6-8, wherein the aerosol provision device comprises a near-field communication, NFC, or radio-frequency identification, RFID, reader, wherein the battery module to which the aerosol provision device is connectable comprises an NFC tag or RFID device, wherein the machine-readable medium of the battery module to which the aerosol provision device is connectable comprises a memory of the NFC tag or RFID device storing the battery identifier, and wherein the controller is configured to obtain the battery identifier from the memory of the NFC tag or RFID device using the NFC or RFID reader.

10. The aerosol provision device as claimed in any one of claims 6 to 9, wherein the aerosol provision device is a non-combustible aerosol provision device.

11. The aerosol provision device as claimed in any one of claims 6 to 10, wherein the aerosol provision device is configured to receive a removable article comprising an aerosol generating material.

12. An aerosol provision system comprising the aerosol provision device as claimed in any one of claims 6 to 11 and the battery module as claimed in any one of claims 1 to 5, wherein the battery module is replaceably attached to the aerosol provision device.

13. A method comprising:
obtaining, by a controller of an aerosol provision device, a battery identifier from a machine-readable medium of a battery module, the battery module being connectable to the aerosol provision device to provide electrical power from a battery of the battery module to the aerosol provision device.

14. A kit of parts comprising:
a battery module as claimed in any one of claims 1 to 5;
an aerosol provision device as claimed in any one of claims 6 to 11; and an article comprising an aerosol generating material for use in the aerosol provision device.
